# EUROPEAN PATENT APPLICATION

(11) **EP 3 171 349 A1**
(43) Date of publication of application: **24.05.2017**
(21) Application number: 16200248.9
(22) Date of filing: 23.11.2016
(51) Int. Cl.: G08B 21/04, G08B 25/00

(54) **SEMI AUTOMATIC MONITORING**

(30) Priority: 23.11.2015 US 201562258562 P; 23.11.2015 US 201562258563 P
(71) Applicant: Essence Smartcare Ltd, 4672530 Herzlia Pituach (IL)
(72) Inventor: Amir, Ohad, 4642300 Herzlia (IL)
(74) Representative: Dennemeyer & Associates S.A.

(57) **Abstract**

An alarm system comprising at least one server and at least one onsite unit. The onsite unit comprising at least one audio sensor adapted to capture audio signals, a hardware memory, at least one processor electrically coupled to the audio sensor, and an onsite unit network interface adapted to transmit a message comprising at least some of the recorded audio signals to the server via a network in response to the detected presence. The hardware processor is adapted to continuously recording the audio signals in the hardware memory, and performing an audio analysis of the audio signals for detecting a presence of predefined oral expression. The server comprising a server data network interface adapted to receive the message, at least one central processor adapted to instruct a presentation of audio signals to a user, and a server communication interface adapted to open a voice communication channel with the onsite unit.

## Description

### BACKGROUND

The present invention, in some embodiments thereof, relates to monitoring premises, and more specifically, but not exclusively, monitoring premises such as a household, detecting conditions for initiating communication with a remote receiver, alerting the remote receiver and automatically connecting between the remote receiver and a person on premises.

There is the need for an alarm system that constantly monitors presence(s) and/or action(s) of person(s) on premises and reacts synchronously to person related events. Examples of monitored premises are independent-living facilities for elders, hotel rooms and hospital beds. The automatic reaction may be notifying another person to call and converse with a person on premises.

A typical alarm system includes one or more sensors for capturing person related signals on premises. The need for a synchronous response to a person related event on premises requires constant monitoring of the signals captured by the sensor(s). There is a need to combine constant monitoring of the captured signals by a machine in the system with human inspection of only those signals that the machine identifies as meeting criteria for triggering an alarm event.

### SUMMARY

It is an object of the invention to provide a monitoring system that has the accuracy of a person-monitored system and the continuous monitoring capabilities of a fully automatic system.

The foregoing and other objects are achieved by the features of the independent claims. Further implementation forms are apparent from the dependent claims, the description and the figures.

According to a first aspect of the invention, an alarm system comprises at least one server and at least one onsite unit. The at least one onsite unit comprises at least one audio sensor adapted to capture audio signals, a hardware memory, at least one hardware processor electrically coupled to the at least one audio sensor, and an onsite unit network interface adapted to transmit a message comprising at least some of the recorded audio signals to the at least one server via a network in response to the detected presence. The at least one hardware processor is adapted to continuously recording the audio signals in the hardware memory, and performing an audio analysis of the audio signals for detecting a presence of predefined oral expression. The at least one server comprises a server data network interface adapted to receive the message, at least one central hardware processor adapted to instruct a presentation of the at least some of the audio signals to a user, and a server communication interface adapted to open a voice communication channel with the onsite unit.

According to a second aspect of the invention, a method for operating an alarm system, comprises at an onsite unit capturing audio signals continuously recording the audio signals in a hardware memory, performing an audio analysis of the audio signals for detecting a presence of predefined oral expression, and transmitting a message comprising at least some of the recorded audio signals to at least one server via a network in response to the detected presence. The method for operating an alarm system further comprises at a server side by the at least one server receiving the message, instructing a presentation of the at least some of the recorded audio signals to a user and initiating a voice communication channel with the onsite unit.

With reference to the first and second aspects, in a first possible implementation of the first and second aspects the alarm system further comprises at least one web server and at least one management device. The at least one server further comprises a control network interface adapted to transmit another message comprising an alarm indication to the at least one web server via another network in response to reception of the message. The at least one web server comprises a web server data network interface adapted to receive the other message and an administration data network interface adapted to transmit a third message comprising another alarm indication to the at least one management device in response to reception of the other message. The at least one management device comprises a device data network interface adapted to receive the third message and a device communication interface adapted to open one or more voice communication channels with the at least one server. The server is adapted to forward some of the one or more voice communication channels to the at least one onsite unit. Having a connection to at least one web server enables transferring alarm indications to a web server that can be accessed by a human. Having a management device enables a human administrator to connect to the web server and monitor alarm events. The management device can be used for the human administrator to communicate with the server and by forwarding the communication channel to the onsite device allows automatically connecting the human administrator to a communication channel with the onsite device.

With reference to the first and second aspects and the first possible manner of implementation of the first and second aspects, in a second possible implementation of the first and second aspects the at least one server further comprises another hardware memory. The at least one server is adapted to store the at least some of the recorded audio signals to the other hardware memory. Storing some of the recorded audio signal to the other hardware memory allows retrieving it at a later point in time.

With reference to the first and second aspects and the first and second possible manners of implementation of the first and second aspects, in a second possible implementation of the first and second aspects the other network is a telephone network. The presentation of the at least some of the audio signals to a user is by playing the audio signal in some of the one or more voice communications.

With reference to the first and second aspects and the first and second possible manners of implementation of the first and second aspects, in a third possible implementation of the first and second aspects the other network is a data cellular network and the at least one management device further comprises hardware components for playing captured audio signals. This allows a human administrator to listen to the captured signals on the management device.The other message further comprises at least some of the recorded audio signals. The third message further comprises at least some of the recorded audio signals. The presentation of the at least some of the audio signals to a user is by playing the audio signals by the at least one management device.

With reference to the first and second aspects and the first, second or third possible manners of implementation of the first and second aspects, in a fourth possible implementation of the first and second aspects the at least one management device further comprises hardware components for emitting audio, visual or tactile signals. The hardware components for emitting audio, visual or tactile signals enable the management device to draw the attention of a human administrator located near the management device.

With reference to the first and second aspects and the first, second, third or fourth possible manners of implementation of the first and second aspects, in a fifth possible implementation of the first and second aspects the at least some of the recorded audio signals is an audio signal captured during a predefined time immediately before recognition of a presence of predefined oral expression within the audio signals by the at least one hardware processor.

With reference to the first and second aspects and the first, second, third, fourth or fifth possible manners of implementation of the first and second aspects, in a sixth possible implementation of the first and second aspects the predetermined predefined oral expression is selected from the group consisting of: a code word, a code phrase, a shout, a scream, or predetermined voice characteristics.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic block diagram of an exemplary system according to the present invention, with regard to implementation of present invention using a voice sensor;
FIG. 2 is a sequence diagram of an optional flow of operations according to the present invention with regard to implementation of present invention using a data cellular network such as a GSM (Global System for Mobile Communications) network;
FIG. 3 is a sequence diagram of another optional flow of operations according to the present invention with regard to implementation of present invention using a telephone network such as a PSTN (Public Switched Telephone Network) network;
FIG. 4 is a schematic block diagram of an exemplary system according to the present invention, with regard to implementation of present invention using a voice sensor and a data cellular network such as a GSM network; and
FIG. 5 is a schematic block diagram of an exemplary system according to the present invention, with regard to implementation of present invention using a voice sensor and a telephone network such as a PSTN network.

### DETAILED DESCRIPTION

The present invention, in some embodiments thereof, relates to monitoring premises, and more specifically, but not exclusively, monitoring premises such as a household, detecting conditions for initiating communication with a remote receiver, automatic dispatch of alert data over an IP connection to the remote receiver and automatically connecting between the remote receiver and a person on premises.

A typical alarm system includes one or more sensors for person related signals on the premises, possibly connected to one or more signal processor(s) for processing the captured signals. A signal processor is connected to a server comprising a central hardware processor. The central hardware processor communicates with a web server(s).

In a manual alarm system, the sensor(s) captures person related signals and delivers the captured signals to a signal processor for the purpose of delivering the captured signals to the server. The server may comprise a human-machine interface enabling a human inspector to inspect captured person related signals in order to identify predefined person related events, or the server may then deliver the captured signals to a web server having a human-machine interface. In a system comprising one or more sensors constantly capturing signals there is a need to mitigate the amount of information the human inspector inspects.

In a fully automatic system, the sensor(s) capture person related signals and deliver the captured signals to the signal processor. The signal processor may process the captured signals for the purpose of identifying predefined person related events. When a predefined person related event is detected, the signal processor may communicate with the server's central hardware processor, and the server's central hardware processor may communicate with the web server, triggering an automatic response. For example, an automatic response may be establishing a phone call between a designated human responder and a person on premises.

Automatic identification of person related events by a signal processor may be less accurate than a person inspecting the captured signals for the purpose of identifying predefined person related events, causing false identification of predefined person related events.

The present invention, in some embodiments thereof, combines constant monitoring and automatic processing of captured signals for the purpose of identifying person related events, together with enabling a human inspector to review part of the captured signals in order to mitigate the number of false identifications.

In some embodiments, a web server communicates with one or more management devices capable of emitting a human perceivable signal. One or more persons, henceforth referred to as an administrator, may monitor the one or more management devices and respond to such human perceivable signals. In systems where an administrator is in a location other than the monitored premises, there is a need to deliver information regarding the human-related event to the administrator. When a person related event is detected, there is also a need to establish a connection between the administrator and a designated person, either on premises or at a different location. In other embodiments, monitoring may be performed automatically in which case no human administrator is present and the information is provided to the designated person without the intervention of a another human.

Examples of sensors are motion sensors, audio sensors and proximity sensors. Typically, a signal processor is a designated electrical hardware component such as a designated DSP microcontroller, or a processor running suitable software for processing the signals delivered by the sensor(s) for the purpose of identifying predefined person related events. In embodiments where the sensor is an audio sensor, the signal processor could be adapted to process audio signals received from the audio sensor by applying audio processing algorithms, for identifying a specific code word, code phrase, scream or any other vocal cue or event within audio captured by the audio sensor. A central hardware processor, henceforth referred to as a control unit, is typically, but not exclusively, a processor running suitable software for communicating with a signal processor and with a web server. In some embodiments, a control unit may comprise suitable hardware and may run suitable software for connecting and communicating on a telephone subsystem. A web server is typically one or more processors running software suitable for communicating with the control unit and for communicating with a management device. A management device is typically a device comprising hardware for emitting human perceivable signals, a human-machine hardware interface and a processor running software suitable for communication with the control unit and the web server and for communication with a human over a human-machine hardware interface. Human perceivable signals may be audio signals, visual signals or tactile signals, for example ringing a bell, flashing a light or vibrating a vibrating component. The human-machine hardware interface may comprise hardware for playing audio signals, two-way phone communication, a keyboard, a microphone and/or a touch interface. In some embodiments, the management device may be a mobile device such as a mobile phone or tablet computer.

In some embodiments of the present invention, part of the signal delivered by the sensor to the signal processor may be delivered to the control unit for the purpose of being inspected by the administrator using a method appropriate to the signal. For example, in embodiments where the signal is an audio signal, the administrator may listen to the signal. In some embodiments the administrator may listen to the signal from a remote location, not on the monitored premises. In such embodiments, there is a need to deliver part of the signal to the management device.

In other embodiments the administrator may view a video signal.

Communication between a signal processor and a control unit typically consists of two-way delivery of digital information between the control unit and the signal processor. In some embodiments, the communication between the signal processor(s) and the control unit may be over an electrical communication channel(s) which may be a wired or wireless channel(s). An electrical communication channel typically comprises electrical components for transmitting and receiving signals, memory for storing received signals or signals to be sent, and a controller, for example a hardware network interface controller or a processor running network software.

Communication between a web server and a management device typically consists of two-way delivery of other digital information between the control unit and the signal processor. In some embodiments, the communication between the web server and the management device may be over another electrical channel(s) which may be a wired or wireless channel(s).

Some embodiments of the present invention may comprise a voice communication subsystem, such as a telephone subsystem. In such embodiments, the management device, control unit and one or more two-way communication devices may be connected to the communication subsystem through communication interfaces.

Communication between the control unit and the web server typically consists of two-way delivery of a third set of digital information between the control unit and the web server. In some embodiments of the present invention, the communication between the control unit and the web server may be over a network that supports IP (Internet Protocol) connections, for example a data cellular network such as a GSM (Global System for Mobile Communications). In such embodiments, at least part of the captured signal may be delivered by the signal processor to the control unit and then by the control unit to the server.

In embodiments where the control unit delivers part of the captured signal to the server, the server may deliver the part of the captured signal to the management device. The administrator may inspect the part of the captured audio signal on the management device. For example, in embodiments where the sensor is an audio sensor, the administrator may play and listen to the part of the captured audio signal on the management device.

In other embodiments, the communication between the control unit and the server may be over a network that does not readily support IP connections, for example a telephone network such as a PSTN (Public Switched Telephone Network). In these embodiments the server may comprise digital storage hardware. In these embodiments, the signal processor may deliver part of the captured signal to the control unit and the control unit may store the part of the captured signal in the server's digital storage hardware. In such embodiments the administrator may communicate with the control unit using the management device in order to inspect the stored part of the captured signal. For example, in embodiments where the sensor is an audio sensor, the administrator may call the server and listen to the stored part of the captured audio signal. In some embodiments of the present invention comprising multiple sensors and where the server may store multiple captured signals, the server may automatically select the correct signal for the administrator to inspect.

After inspecting the stored signal, for example after hearing a recording, in some embodiments of the present invention the administrator may acknowledge the person related event, for example by touching the management device, typing in to the management device or speaking to the management device. In embodiments where the sensor is an audio sensor, the event may be a vocal cue. Upon the person related event being acknowledged, the management device may establish a communication channel, such as a phone call, to the server over a communication sub-system such as a telephone sub-system, and the server may automatically forward the communication channel, for example forward the phone call, to a designated two-way communication device connected to the communication sub-system, for example a phone connected to the telephone sub-system. The designated two-way communication device may share housing with the sensor, may be a separate device located on the monitored premises or may be located at a location not on the monitored premises.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

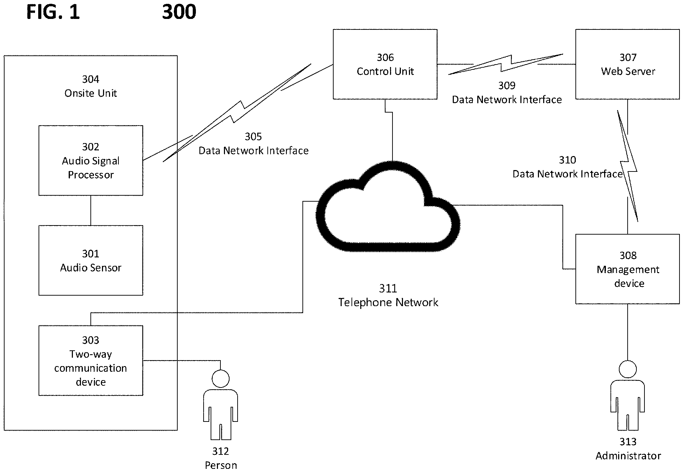

Reference is now made to FIG. 1, showing an illustrative system **300** having an onsite unit **304,** according to some embodiments of the present invention. In such embodiments, the onsite unit **304** comprises an audio sensor **301** electrically connected to an audio signal processor **302.** In these embodiments, the audio signal processor **302** may be connected to a control unit **306** via data network interface **305.** In these embodiments, control unit **306** may be connected to a web server **307** via a second data network interface **309.** Web server **307** may be connected in these embodiments to management device **308** via a third data network interface **310.** System **300** may also comprise a telephone network subsystem **311.** Management device **308,** control unit **306** and one or more two-way communication devices **303** may be connected to the telephone subsystem **311.** In these embodiments management device **308** may be monitored by administrator **313.** Two-way communication device **303** may be used to communicate with a person **312** on premises.

A telephone network subsystem may be a public or private telephone network, such as a PSTN, GSM network or an IP-based telephone network.

In such embodiments, onsite unit **304** may be installed on the monitored premises. In embodiments where the two way communication device **303** is installed in the same housing as onsite unit **304,** the two-way communication device may be used to communicate with a person on the monitored premises. In other embodiments, a two-way communication device may be installed in a separate housing in a location different from the monitored premises.

In some embodiments, the data network interface between the control unit **306** and the web server **307** may be a telephone network that supports IP connections, for example a data cellular network such as GSM. In such embodiments, it is possible to transfer digital files between the control unit and the web server.

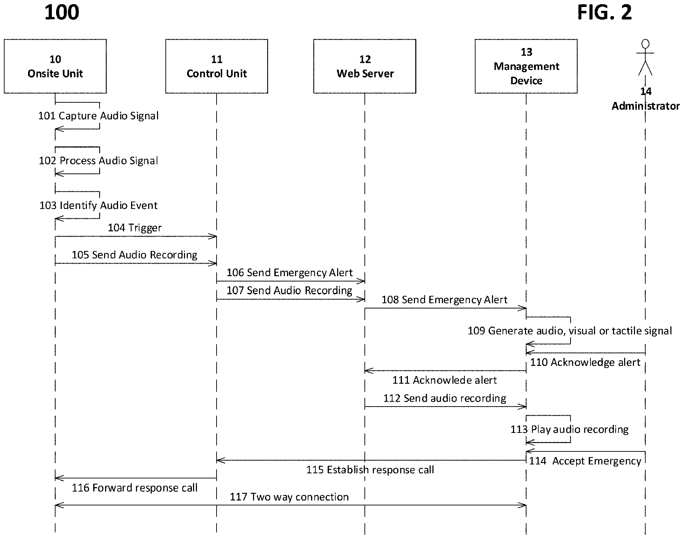

FIG. 2 depicts a sequence diagram of an optional flow of operations **100** according to the present invention with regard to implementation of the present invention using an audio sensor, and a data cellular network to connect the control unit and the web server. In such environments, an audio sensor in the onsite unit **10** may capture **101** an audio signal and may deliver the captured signal to the signal processor. The signal processor in the onsite unit **10** may process **102** the signal, and upon recognizing **103** a predefined oral expression, such as the identification of a specific sound or voice, may send one or more messages containing a trigger **104** and at least a part of the audio recording **105** to control unit **11.** The one or more messages sent by the onsite unit to the control unit in **104** and **105** may be digital information in a format understood by the control unit. The digital information may include part of the audio signal captured prior to identifying the predefined oral expression. For example, the digital information may include the audio signal captured for a pre-defined length of time prior to detecting the predefined oral expression.

Upon receiving the trigger, control unit **11** may send web server **12** one or more other messages containing an emergency alert **106** and the audio recording **107.** The one or more other messages sent by the control unit to the web server in **106** and **107** may be a third set of digital information in a format understood by the web server. Web server **12,** upon receiving the emergency alert **106,** may send a third set of one or more messages including another emergency alert **108** to management device **13.** The third set of one or more messages may be other digital information in a format understood by the management device.

Upon receiving the other emergency alert, management device 13 may generate human perceivable signal **109** which may be audio, visual or tactile. For example, in some embodiments, the management device may flash a light installed in the management device. In other embodiments the management device may sound a bell or vibrate a vibrating component.

Upon perceiving the human perceivable signal, the administrator may acknowledge the alert **110** by interacting with the management device using the management device's human-machine interface. For example, in some embodiments the administrator may push a button on the management device. In other embodiments the administrator may type information using a keyboard installed in the management device. In yet other embodiments, the administrator may touch a screen or use audio commands.

After the administrator acknowledges the alert **110,** the management device may automatically acknowledge the alert **111** by sending the web server a fourth set of digital information in a format understood by the server **12.** When the web server receives the acknowledgement, it may send **112** the audio recording to the management device. The management device may play the audio recording **113,** and upon hearing the recording the administrator **14** may accept the emergency **114** by interacting with the management device using the management device's human-machine interface. In such embodiments, upon the administrator accepting the emergency, the management device may initiate a response call **115** to the control unit, for example over a telephone sub-system. The control unit may automatically forward the response call to a predefined two-way communication device. In embodiments where a two-way communication device is installed in the onsite unit, the control unit may automatically forward the emergency call to the two-way communication device installed in the onsite unit **116,** establishing **117** a two way connection between the management device and the onsite unit.

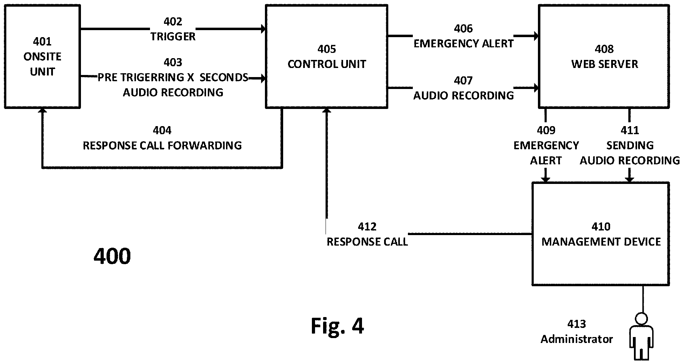

Referring now to FIG. 4, showing the same optional flow of operations in a schematic block diagram **400** of an exemplary system according to the present invention, with regard to implementation of present invention using a voice sensor and a data cellular network such as a GSM network.

Onsite unit **401** may communicate with control unit **405,** sending it a trigger when a predefined oral expression is detected, as well as an audio recording **403** of a predefined time prior to the trigger event. The control unit **405** may send an emergency alert **406** and the audio recording **407** to the web server **408,** following which the web server **408** may send another emergency alert **409** to the management device **410.** Upon the administrator **413** acknowledging the alert, web server **408** may send the audio recording to the management device **411.** The management device may play the audio recording to the administrator, and the administrator may accept the emergency. Upon the administrator accepting the emergency, the management device **410** may initiate a response call **412** to the control unit **405.** In embodiments where a two-way communication device is installed in the onsite unit, the control unit **405** may forward the call **404** to the onsite unit.

In other embodiments, the communication interface between the control unit and the web server may be a telephone network that does not readily support IP connections, such as a PSTN. In such embodiments, it is difficult to transfer digital files between the control unit and the web server and thus difficult to deliver an audio recording to the management device via the web server.

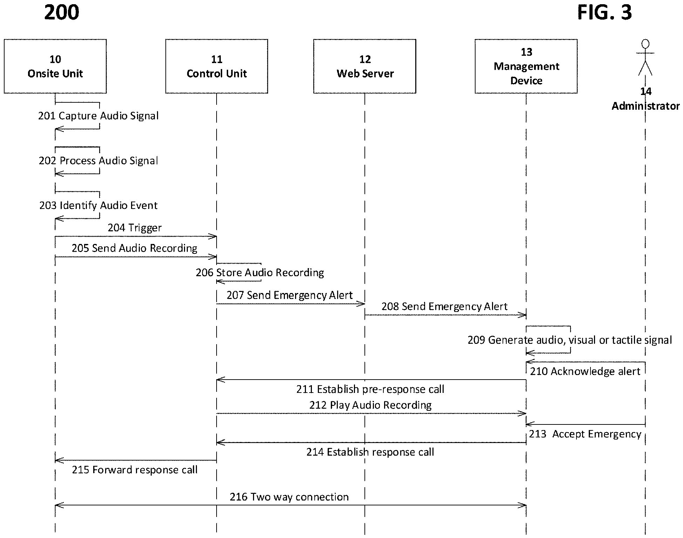

FIG. 3 depicts a sequence diagram of another optional flow of operations **200** according to the present invention with regard to implementation of the present invention using an audio sensor, and a PSTN network to connect the control unit and the web server. In such environments, a sensor in the onsite unit **10** may capture **201** an audio signal and deliver the signal to the signal processor. The signal processor in the onsite unit **10** may process **202** the signal, and upon **203** recognizing a predefined oral expression, such as the identification of a specific sound or voice, may send one or more messages including a trigger **204** and part of the audio recording **205** to control unit **11.** The one or more messages sent by the onsite unit to the control unit in **204** and **205** may be digital information in a format understood by the control unit. The digital information may include part of the audio signal captured prior to identifying the predefined oral expression. For example, the digital information may include the audio signal captured for a pre-defined length of time prior to detecting the predefined oral expression.

Upon receiving the trigger, control unit **11** may store the audio recording **206** and may send web server **12** one or more other messages including an emergency alert **207.** The one or more other messages sent by the control unit to the web server in **207** may be a third set of digital information in a format understood by the web server. Web server **12,** upon receiving the emergency alert **207,** may send a third set of one or more messages including another emergency alert **208** to management device **13.** The third set of one or more messages may be other digital information in a format understood by the management device.

Upon receiving the other emergency alert, management device **13** may generate human perceivable signal **209** which may be audio, visual or tactile.

Upon perceiving the human perceivable signal, the administrator **14** may acknowledge the alert **210** by interacting with the management device using the management device's human-machine interface.

After the administrator acknowledges the alert **210,** the management device may automatically establish a pre-response call **211** to the control unit **11.** When the pre-response call is established, the control unit **11** may play the audio recording **212** over the call, for the administrator **14** to hear. The administrator may then accept the emergency **213** using the management device's human-machine interface. In such embodiments, upon the administrator accepting the emergency, the management device may initiate a response call **214** to the control unit, for example over a telephone sub-system. The control unit may automatically forward the response call to a predefined two-way communication device. In embodiments where a two-way communication device is installed in the onsite unit, the control unit may automatically forward the emergency call to the two-way communication device installed in the onsite unit **215,** establishing **216** a two way connection between the management device and the onsite unit.

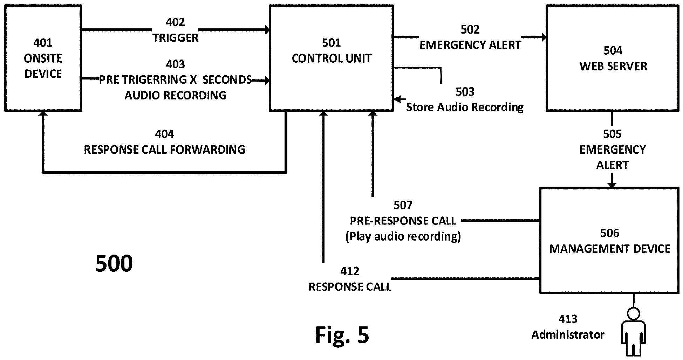

Referring now to FIG. 5, showing the same other optional flow of operations in a schematic block diagram **500** of an exemplary system according to the present invention, with regard to implementation of present invention using a voice sensor and a telephone network such as a PSTN network.

Onsite unit **401** may communicate with control unit **405,** sending it a trigger when a predefined oral expression is detected, as well as an audio recording **403** of a predefined time prior to the trigger event. The control unit **501** may store **503** the audio recording and may send an emergency alert **502** to the web server **504,** following which the server **504** may send another emergency alert **505** to the management device **506.** Upon the administrator **413** acknowledging the alert, the management device may establish a telephone call **507** to the control unit **501** over a telephone subsystem. In this call the control unit may play the audio recording for the administrator **413** to hear and the administrator may accept the emergency.

Upon the administrator accepting the emergency, the management device **506** may initiate a response call **412** to the control unit **501.** In embodiments where a two-way communication device is installed in the onsite unit, the control unit **501** may forward the call **404** to the onsite unit.

In some embodiments of the present invention, having a telephone subsystem and comprising more than one two-way communication device connected to the telephone subsystem, if the control unit fails to forward the call from the administrator to a predefined two-way communication device the control unit may forward the call from the administrator to another predefined two-way communication device.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant sensors and communication networks will be developed and the scope of the terms sensor, signal and telephone network is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. An alarm system, comprising:
at least one server;
at least one onsite unit (304) comprising:
at least one audio sensor (301) adapted to capture audio signals;
a hardware memory;
at least one hardware processor (302) electrically coupled to said at least one audio sensor and adapted to:
continuously recording said audio signals in said hardware memory; and
performing audio analysis of said audio signals for detecting a presence of predefined oral expression; and
an onsite unit network interface adapted to transmit a message comprising at least some of said recorded audio signals to said at least one server via a network (305) in response to said detected presence;
wherein said at least one server comprising:
a server data network interface adapted to receive said message;
at least one central hardware processor (306) adapted to instruct a presentation of said at least some of said audio signals to a user; and
a server communication interface (311) adapted to open a voice communication channel with said onsite unit.

2. The alarm system of claim 1, further comprising:
at least one web server (307);
wherein said at least one server further comprising:
a control network interface adapted to transmit another message comprising an alarm indication to said at least one web server via another network (309) in response to reception of said message; and
wherein said at least one web server comprising:
a web server data network interface adapted to receive said other message.

3. The alarm system of claim 2, further comprising:
at least one management device (308);
wherein said at least one web server further comprising:
an administration data network interface (310) adapted to transmit a third message comprising another alarm indication to said at least one management device in response to reception of said other message; and
wherein said at least one management device comprising:
a device data network interface (310) adapted to receive said third message; and
a device communication interface (311) adapted to initiate one or more voice communication channels with said at least one server; and
wherein said server is adapted to forward some of said one or more voice communication channels to said at least one onsite unit (304).

4. The alarm system of claim 3, wherein said at least one management device (308) further comprising:
hardware components for playing captured audio signals.

5. The alarm system of claim 3, wherein said at least one management device (308) further comprising:
hardware components for emitting audio, visual or tactile signals.

6. The alarm system of claim 3, wherein said at least one server (306) further comprising:
another hardware memory; and
wherein said at least one server is adapted to store said at least some of said recorded audio signals to said another hardware memory.

7. The alarm system of claim 6, further comprising:
wherein said another network (309) is a telephone network; and
wherein said presentation of said at least some of said audio signals to a user is by playing said audio signal in some of said one or more voice communications.

8. The alarm system of claim 4, further comprising:
wherein said another network (309) is a data cellular network;
wherein said another message further comprising at least some of said recorded audio signals;
wherein said third message further comprising at least some of said recorded audio signals; and
wherein said presentation of said at least some of said audio signals to a user is by playing said audio signals by said at least one management device (308).

9. The alarm system of claim 1, wherein said at least some of said recorded audio signals is an audio signal captured during a predefined time immediately before recognition of a presence of predefined oral expression within said audio signals by said at least one hardware processor.

10. The alarm system of claim 1, wherein said predetermined predefined oral expression is selected from the group consisting of: a code word; a code phrase; a shout, a scream, and predetermined voice characteristics.

11. A method for operating an alarm system, comprising:
at an onsite unit side:
capturing audio signals;
continuously recording said audio signals in a hardware memory;
performing audio analysis of said audio signals for detecting a presence of predefined oral expression; and
transmitting a message comprising at least some of said recorded audio signals to at least one server via a network in response to said detected presence; and
at a server side by said at least one server:
receiving said message;
instructing a presentation of said at least some of said recorded audio signals to a user; and
initiating a voice communication channel with said onsite unit.

12. The method of claim 11, further comprising:
storing by said at least one server said at least some of said recorded audio signals to digital storage hardware.

13. The method of claim 12, further comprising:
at said server side:
transmitting a second message comprising an alarm indication by said at least one server to at least one web server via a second network in response to reception of said message; and
receiving said second message by said at least one web server.

14. The method of claim 13, further comprising:
at said server side:
transmitting a third message comprising an alarm indication by said at least one web server to at least one management device via a third network in response to reception of said second message;
initiating a second voice communication channel by said at least one management device with said at least one server; and
forwarding said second voice communication channel to said onsite unit.

15. The method of claim 14, further comprising:
at said server side:
initiating by said at least one management device a third voice communication channel with said at least one server; and
instructing a presentation of said at least some of said recorded audio signals to a user on said third voice communication channel with said at least one server.
